(19) Europäisches Patentamt

European Patent Office

Office européen des brevets

(11) Veröffentlichungsnummer: **0 353 222 B1**

(12) **EUROPÄISCHE PATENTSCHRIFT**

(45) Veröffentlichungstag der Patentschrift:
17.04.91 Patentblatt 91/16

(51) Int. Cl.⁵: **F02B 51/02**

(21) Anmeldenummer: 87907747.7

(22) Anmeldetag: 04.12.87

(86) Internationale Anmeldenummer:
PCT/DE87/00572

(87) Internationale Veröffentlichungsnummer:
WO 88/06680 07.09.88 Gazette 88/20

(54) **ZÜNDANORDNUNG MIT HERABGESETZTER ZÜNDTEMPERATUR.**

(30) Priorität: 28.02.87 DE 3706576

(43) Veröffentlichungstag der Anmeldung:
07.02.90 Patentblatt 90/06

(45) Bekanntmachung des Hinweises auf die
Patenterteilung:
17.04.91 Patentblatt 91/16

(84) Benannte Vertragsstaaten:
DE FR GB IT SE

(56) Entgegenhaltungen:
US-A- 439 830
US-A- 4 530 340
Patent Abstracts of Japan, Vol. 8, Nr. 284
(M-348) (1721) 26 December 1984 & JP, A,
59150948 (TOYOTA JIDOSHA K.K.) 29 August
1984 see abstract

(73) Patentinhaber: ROBERT BOSCH GMBH
Postfach 50
W-7000 Stuttgart 1 (DE)

(72) Erfinder: BARESEL, Detlef
Gustav-Siegle-Stra e 80
W-7000 Stuttgart 1 (DE)
Erfinder: HUTH, Gerhard
Uhlbacherstra e 209
W-7000 Stuttgart 61 (DE)
Erfinder: KLING, Anton
Drosselweg 22
W-7016 Gerlingen (DE)

## Beschreibung

### Stand der Technik

Die Erfindung geht aus von einer Zündanordnung wie Glühkerzen, Zündkerzen oder Glühvorsätzen nach der Gattung des Hauptanspruchs. Diese Zündanordnungen weisen an ihrer mit dem Brennstoff-Luft-Gemisch ausgesetzten Oberfläche normalerweise Keramik in Form von Aluminiumoxid oder ein Metall auf. Dem Mechanismus der Verbrennung wird dabei gewöhnlich kein besonderes Augenmerk geschenkt, so daß die Zündtemperaturen verhältnismäßig hoch liegen. Je höher jedoch die Zündtemperatur, umso kürzer ist die Lebensdauer der Zündaggregate. Außerdem ist es umso schwieriger, ein möglichst schadstoffarmes Abgas zu erreichen, je höher die Zündtemperatur des Brennstoff-Luft-Gemischs ist. Aus der US-A-4 530 340 ist es bekannt, die Verbrennung von Kohlenwasserstoff-Brennstoffen in der Verbrennungskammer einer Brennkraftmaschine dadurch zu beschleunigen, daß ein katalytischer Überzug im Bereich der Verbrennungszone aufgebracht wird. Dabei sollen jedoch die Zündkerzenelektroden von der Beschichtung ausgenommen werden. Der katalytische Überzug besteht aus einem Träger, der aus der Gruppe $SiO_2$, $Al_2O_3$ und $ZrO_2$ ausgewählt ist und auseinem Metalloxid der Gruppe $Co_3O_4$, MgO, $TiO_2$ und $Al_2O_3$.

### Vorteile der Erfindung

Die erfindungsgemäße Zündanordnung mit den kennzeichnenden Merkmalen des Hauptanspruchs hat demgegenüber den Vorteil, daß die Zündtemperatur an einer solchen Zündanordnung um bis zu 100°C unter derjenigen Zündtemperatur liegt, die mit einer Zündvorrichtung erreicht werden kann, welche die katalytische Beschichtung nicht aufweist.

Zündanordnungen werden an exponierten Stellen durch Funkenbildung oder Erwärmung so stark erhitzt, daß das sie umgebende Brennstoff-Luft-Gemisch mehr oder weniger plötzlich verbrennt, zum Beispiel in Otto-Motoren oder Diesel-Motoren. Um nun eine möglichst niedrige Zündtemperatur zu erreichen, muß der Primärvorgang der Zündung beschleunigt werden, der bei Kohlenwasserstoffen, die Hauptbestandteile derartiger Brennstoffe sind, in einem Crackprozeß besteht. Erst danach erfolgt die mit Hilfe der beim Crackprozeß entstandenden Radikale sehr stark beschleunigte Oxidation der Kohlenwasserstoffe, die in Form einer Explosion abläuft. Es hat sich nun gezeigt, daß die Beschleunigung dieses Crackprozesses von Kohlenwasserstoffen mit Katalysatoren erzielbar ist, die an ihrer Oberfläche möglichst starke Coulomb-Felder besitzen, hohe Temperaturen bis ca. 1300°C vertragen und unter den Betriebsbedingungen eines Benzin- oder Dieselmotors ausreichende Aktivitäten aufweisen. Diese Katalysatoren müssen daher aus anorganischen Stoffen mit überwiegend ionisch gebundenen Gitterbausteinen bestehen. Das bedeutet, daß kovalente Bindungskräfte und/oder ein leichter Valenzwechsel, gleichbedeutend mit einer leichten Austauschbarkeit von p-, d- oder f-Elektronen mit den Kohlenwasserstoffen und Sauerstoff, bei diesen Stoffen so weit wie erforderlich verringert werden sollten.

Durch die in den Unteransprüchen aufgeführten Maßnahmen sind vorteilhafte Weiterbildungen und Verbesserungen der im Hauptanspruch angegebenen Zündanordnung möglich. Besonders vorteilhaft ist es, wenn die katalytische Beschichtung aus einem modifizierten Aluminiumoxid besteht, das noch Siliciumoxid, Yttriumoxid, Lanthanoxid oder Ceroxid sowie mindestens ein weiteres Oxid aus der Gruppe der Alkali- oder Erdalkalimetalle und darüber hinaus gegebenenfalls noch mindestens ein Oxid eines d-Übergangsmetalls, vor allen Dingen Chromoxid und/oder Nickeloxid enthält.

Außer den oben bereits erwähnten, möglichst starken Coulomb-Feldern müssen die für die katalytische Beschichtung verwendeten Materialien hohe Temperaturen bis ca. 1300°C vertragen und unter den Betriebsbedingungen eines Benzin- oder Dieselmotors eine ausreichende Aktivität aufweisen. Sie müssen daher aus anorganischen Stoffen mit überwiegend ionisch gebundenen Gitterbausteinen bestehen, wie dies bei den obengenannten Stoffen der Fall ist. Kovalente Bindungskräfte und/oder leichter Valenzwechsel, d. h. eine leichte Austauschbarkeit von p-, d- oder f-Elektronen mit den Kohlenwasserstoffen und Sauerstoff, sind wohl bei diesen Stoffen so weit wie erforderlich verringert. - Beim Versatz der Oxide von Al, Si, Y, La und Ce als Basisoxide mit d-Metalloxiden, die für sich genommen Oxidationskatalysatoren Darstellen, können sich durch Reaktion mit einem zweiten d-Metalloxid oder einem anderen Metalloxid neue katalytisch oxidativ inaktive Verbindungen bilden, zum Beispiel Spinelle. Perowskite, Pyrochlore oder andere komplexe Metalloxide, die ebenfalls den Verbrennungsmechanismus derart beeinflussen, daß die Zündtemperatur herabgesetzt wird.

### Beschreibung der Ausführungsbeispiele

Die Beschichtung von Kermikglühstiftkerzen oder Zündkerzen aus Stahl oder Siliciumnitrid ($Si_3 N_4$) oder

EP 0 353 222 B1

Glühvorsätzen z. B. aus Platin oder Still erfolgt so, daß eine aus vorgesintertem Metalloxid-Gemisch und Dicköl hergestellte Paste auf die heizbare Kuppe einer Kermik-Glühstiftkerze, wie sie in der DE-PS 31 46 653 beschrieben ist oder auf die Kuppe einer Glühkerze aus Still für Dieselmotoren oder einer Glühstiftkerze aus Siliciumnitrid aufgestrichen und eingesintert wird. Die Metalloxidgemische werden – bis auf $SiO_2$ – aus den wässrigen Lösungen der Metallsalze und anschließende Temperung gewonnen. $SiO_2$ wurde als feines Pulver in der wässrigen Lösung vor der Fällung suspendiert.

Beispiel 1 :

24,15 g $AlCl_3$. 6 $H_2O$ und 3,33 g $CaCl_2$ werden im 400 ml $H_2O$ gelöst. In der Lösung werden 1,2 g $SiO_2$ -Pulver mit einer Korngröße von 100 bis 1000 nm suspendiert. Dann wurde tropfenweise mit halbkonzentriertem $NH_4OH$ bei pH = 8 gefällt. Nach der Fällung wurde bis zur Trockene eingedampft und anschließend innerhalb vom 5 Stunden auf 500°C erhitzt, um alles $NH_3$, $H_2O$ und $NH_4Cl$ zu vertreiben. Die Oxide wurden dann 24 Stunden in Toluol naß gemahlen, an Luft und im Vakuumtrockenschrank bei 90°C getrocknet und anschließend mit einem in der Dickschichttechnik gebräuchlichen, handelsüblichen Dicköl zu eimer streichfähigen Paste verarbeitet. Die Paste wird auf die heizbare Kuppe einer Glühstiftkerze gestrichen und zwei Stunden bei 1300°C eingebrannt. Die Beschichtung weist eine Dicke von ca. 1000 nm auf.

Beispiel 2

24,15 g $AlCl_3$. 6 $H_2O$ und 3,33 g $CaCl_2$ werden in 400 ml $H_2O$ gelöst. Aus der Lösung wird dann mit, $NH_4OH$ gefällt und bis zur Pastenherstellung verfahren, wie dies im Beispiel 1 beschrieben ist. Die Paste wird dann auf die Kuppe einer Glühkerze für Dieselmotoren, die zum Beispiel aus Stahl besteht, aufgestrichen und bei 1300°C an Luft 2 bis 3 Stunden gesintert. Die Dicke der Beschichtung betrug ca. 1000 nm.

Beispiel 3 :

Die nach Beispiel 2 hergestellte Paste wird auf eine Glühstiftkerze aus Siliciumnitrid aufgestrichen und bei 1550°C 2 Stunden unter einem Argon-Wasserstoff-Gemisch oder an Luft bei 1300°C gesintert.

Die Ergebnisse, die mit derartigen Beschichtungen erhalten werden, sind der folgenden Tabelle zu entnehmen, in welcher die Zündtemperaturen ($T_G$) von Otto-Kraftstoffen an keramischen Glühstiftkerzen bei einem Luft/Brennstoffverhältnis Lambda von 1,0 und 0,9 in einem Otto-Motor aufgeführt sind.

Tabelle : Zündtemperaturen $T_G$ von beschichteten und unbeschichteten Keramik-Glühstiftkerzen bei $\lambda$ = 1,0 und $\lambda$ = 0,9 im Benzinmotor (Briggs u. Stratton) bei 100% Nachentflammung sowie, in der vorletzten Spalte, der Mittelwert beider ; $\Delta T$ = jeweilige Erniedrigung der Zündtemperatur

| Zusammensetzung der Schicht in Mol% | $T_G$ [°C] $\lambda$=1,0 | $\lambda$=0,9 | 1>$\lambda$>0,9 | $\Delta T$ [°C] |
|---|---|---|---|---|
| ohne | 990 | 983 | 987 | |
| | | | | 12 |
| 0,4 $Al_2O_3$+0,2 $SiO_2$+0,2 $CaO$+0,2 $NiO$ | 960 | 989 | 975 | |
| | | | | 6f |
| 0,4 $Al_2O_3$+0,2 $SiO_2$+0,2 $Cr_2O_3$+0,2 $NiO$ | 901 | 914 | 908 | |
| | | | | 5 |
| 0,25 $Al_2O_3$+0,75 $SiO_2$ | 900 | 906 | 903 | |
| | | | | 3 |
| 0,9 $Al_2O_3$          +0,1 $Cr_2O_3$ | 896 | 903 | 900 | |
| | | | | 15 |
| 0,5 $Al_2O_3$+0,2 $SiO_2$+0,3 $CaO$ | 882 | 888 | 885 | |

Man sieht, daß man durch die erfindungsgemäße Maßnahme einer den Crackprozeß von Kohlenwasserstoffen Katalysierenden Beschichtung die Zündtemperatur eines Benzin-Luft-Gemisches um bis zu 100°C absenken kann. Dies führt, wie oben bereits betont, zu einer längeren Lebensdauer der Zündanordnung ; es können darüber hinaus die schädlichen Abgaskomponenten auf einem Minimum gehalten werden ; schließlich ist es auch möglich, die Vorheiztemperatur beim Dieselmotor zu erniedrigen.

## Ansprüche

1. Zündanordnung wie Glühkerze, Zündkerze oder Glühvorsatz, mit einer dem Brennstoff-Luft-Gemisch ausgsetzten Oberfläche aus Keramik oder Metall, welche zumindest teilweise eine Beschichtung trägt aus Stoffen, die an ihrer Oberfläche starke Coulomb-Felder aufweisen und den Crack-Prozeß der in dem Brennstoff enthaltenden Kohlenwasserstoffe katalysieren, dadurch gekennzeichnet, daß die Beschichtung wenigstens ein komplexes Metalloxid, wie Spinell, Perowskit oder Pyrochlor enthält, welches durch Reaktion mindestens eines Basis-Oxids aus der Gruppe der Oxide der Elemente Si, Y, La und Ce oder aus einem Mischoxid aus den genannten Oxiden mit $Al_2O_3$ mit mindestens einem weiteren Oxid aus der Gruppe der Oxide der Elemente Li, Na, K, Ca, Sr und Ba gebildet ist.

2. Zündanordnung nach Anspruch 1, dadurch gekennzeichnet, daß die Oxide der Elemente Si, Y, La und Ce sowie $Al_2O_3$ als Basisoxide in einer Menge von 40 bis 99 Mol-% in der Beschichtung enthalten sind.

3. Zündanordnung nach einem der Ansprüche 1 und 2, dadurch gekennzeichnet, daß die Beschichtung eine Dicke von 100 bis 10.000 nm aufweist.

## Claims

1. Ignition arrangement such as glow plug, spark plug or surface-ignition attachment, having a surface exposed to the fuel-air mixture which is of ceramic or metal and at least partially bears a coating of substances which exhibit strong Coulomb fields at their surface and catalyse the cracking process of the hydrocarbons contained in the fuel, characterised in that the coating contains at least one complex metal oxide, such as spinel, perovskite or pyrochlore, which is formed by reaction of at least one base oxide from the group of oxides of the elements Si, Y, La and Ce or from a mixed oxide from the said oxides with $Al_2O_3$ with at least one further oxide from the group of oxides of the elements Li, Na, K, Ca, Sr and Ba.

2. Ignition arrangement according to Claim 1, characterised in that the oxides of the elements Si, Y, La and Ce as well as $Al_2O_3$ as base oxide are contained in the coating in an amount of 40 to 90 mol%.

3. Ignition arrangement according to one of Claims 1 and 2, characterised in that the coating has a thickness of 100 to 10,000 nm.

## Revendications

1. Dispositif d'allumage tel que bougie de préchauffage à incandescence, bougie d'allumage ou élément à incandescence, avec une surface en céramique ou en métal exposée au mélange air-carburant, qui porte au moins partiellement un revêtement de matières, qui comportent à leur surface de forts champs de Coulomb et catalysent le craquage des hydrocarbures présents dans le carburant, caractérisé en ce que le revêtement contient au moins un oxyde métallique complexe, comme du spinelle, de la perowskite ou du pyrochlore, qui est formé par réaction d'au moins un oxyde de base du groupe des oxydes des éléments Si, Y, La et Ce ou d'un oxyde mixte des oxydes indiqués avec $Al_2O_3$, avec au moins un autre oxyde du groupe des oxydes des éléments Li, Na, K, C, Sr et Ba.

2. Dispositif d'allumage selon la revendication 1, caractérisé en ce que les oxydes des éléments Si, Y, La, Ce ainsi que $Al_2O_3$ sont contenus dans le revêtement en quantité de 40 à 99% en mol.

3. Dispositif d'allumage selon l'une des revendications 1 et 2, caractérisé en ce que le revêtement comporte une épaisseur de 100 à 10 000 nm.